# EUROPÄISCHE PATENTSCHRIFT

(11) **EP 2 603 562 B1**
(45) Veröffentlichungstag und Bekanntmachung des Hinweises auf die Patenterteilung: **25.06.2014**
(21) Anmeldenummer: 11748610.0
(22) Anmeldetag: 08.08.2011
(51) Int. Cl.: C08L 83/04, B32B 27/28

(54) **SELBSTHAFTENDE SILICONELASTOMERE**
SELF-ADHESIVE SILICONE ELASTOMERS
ÉLASTOMÈRES SILICONES ADHÉSIFS

(30) Priorität: 09.08.2010 DE 102010039085
(43) Veröffentlichungstag der Anmeldung: 19.06.2013
(73) Patentinhaber: Wacker Chemie AG, 81737 München (DE)
(72) Erfinder: BORTENSCHLAGER, Martin, 85232 Bergkirchen (DE); FRESE, Thomas, 84489 Burghausen (DE); JUNG-ROSSETTI, Silvia, 80636 München (DE); LEUTE, Maria, 81475 München (DE)
(74) Vertreter: Fritz, Helmut
(86) Internationale Anmeldenummer: PCT/EP2011/063607
(87) Internationale Veröffentlichungsnummer: WO 2012/019992

(56) Entgegenhaltungen:
- EP-A1- 0 728 825
- EP-A1- 1 375 622
- EP-A1- 1 854 847
- EP-A2- 0 686 671
- WO-A2-2009/037156

## Beschreibung

Die vorliegende Erfindung betrifft additionsvernetzte Siliconzusammensetzungen, welche einen Haftvermittler enthalten, Siliconelastomere, die aus den Siliconzusammensetzungen (S) hergestellt sind, ein Verfahren zur Herstellung der additionsvernetzenden Siliconzusammensetzungen, Verbundmaterial mit dem additionsvernetzenden Siliconelastomer und ein Verfahren zur Herstellung von Verbundmaterialien mit dem additionsvernetzenden Siliconelastomer.

Verbundartikel aus verschiedenen Materialien werden als Werkstoffe immer wichtiger. Die Anforderung an diese Materialien ist ein fester und unter den entsprechenden Einsatzbedingungen dauerhafter Verbund zwischen den einzelnen Substratmaterialien.

Als Substratmaterialien kommen beispielsweise Metalle, Gläser, Keramiken, organische Polymere oder biologische Materialien in Frage. Insbesondere Silicone bzw. vernetzbare Siliconmassen spielen eine größer werdende Rolle als Substratmaterialien. Bei diesen ist allerdings aufgrund ihrer abhäsiven Natur ein dauerhafter Verbund schwierig zu erreichen.

Aus der Literatur sind zahlreiche Technologien bekannt, um eine feste und dauerhafte Verbindung zwischen Siliconen und anderen Substratmaterialien herzustellen.

Grundsätzlich besteht die Möglichkeit einer Modifizierung der chemischen und physikalischen Beschaffenheit des Substratmaterials, um die Haftfestigkeit zwischen dem Silicon und dem Substratmaterial zu verbessern.

Ein beispielhaftes Verfahren stellt die Vorbehandlung der Oberfläche der Substratmaterialien mit UV-Bestrahlung, Beflammung, Corona- oder Plasmabehandlung dar. Bei derartigen Vorbehandlungsschritten wird die Oberfläche bzw. oberflächennahe Schicht der Substratmaterialien aktiviert, d.h. es werden funktionelle, vorwiegend polare Gruppen geschaffen, welche das Zustandekommen einer Verbindung ermöglichen und auf diese Weise zur Realisierung eines dauerhaften Verbundmaterials beitragen.

Ein anderer Weg der Herstellung von dauerhaft festen Silicon-Verbundmaterialien stellt die Aufbringung von Grundierungen, sog. Primer, auf das Substratmaterial dar. Derartige Grundierungen enthalten jedoch neben haftvermittelnden Additiven oftmals auch Lösemittel, die nach der Aufbringung auf das Substratmaterial wieder entfernt werden müssen.

Nachteil all dieser Methoden ist, dass durch die Vorbehandlung der Substrate ein zusätzlicher Prozessschritt nötig wird.

Dieser Nachteil kann umgangen werden, indem im Substratmaterial geeignete funktionelle Gruppen in Volumen bzw. an der Oberfläche des Silicons bzw. des Substratmaterials zur Verfügung gestellt werden, welche bei der Herstellung des Verbundartikels einen Beitrag zum Haftungsaufbau liefern.

In EP0601882 wird beispielsweise ein Verbundmaterial aus einem Siliconelastomer und einem organischen Kunststoff beschrieben, bei dem als Substratmaterial ein Polycarbonat verwendet wird, das zusätzliche aliphatisch ungesättigte Gruppen enthält.

Demgegenüber beschreibt EP0143994 die Bereitstellung eines Organohydrogenpolysiloxan enthaltenden organischen Kunststoffes, der nach Vulkanisation mit einer additionsvernetzenden Siliconzusammensetzung ebenfalls die Herstellung eines dauerhaft festen Verbundmaterials ermöglicht. Die eben beschriebene Vorgehensweise erfordert jedoch eine strukturelle Modifizierung mindestens eines der Substrate, wodurch die physikalischen und chemischen Eigenschaften negativ beeinflusst werden können. Außerdem ist eine chemische Modifizierung von Polymeren mit einem zum Teil erheblichen Aufwand verbunden.

Ein weiterer Weg, Haftung zwischen einem Silicon und einem polymeren Substrat zu erreichen, ist der Zusatz spezieller Additive und/oder spezieller Vernetzer, sogenannter Haftvermittler. Diese den unvernetzten Siliconzusammensetzungen beigemischten Additive bewirken während bzw. nach der Vulkanisation - gegebenenfalls erst nach Lagerung - einen Haftungsaufbau mit einem Substratmaterial.

Hierdurch wird nicht entscheidend in die chemische Natur der am Verbund beteiligten Materialien eingegriffen. Zudem ist in der Regel keine weitere Vorbehandlung der Substratmaterialien notwendig.

EP0875536 beschreibt eine selbsthaftende Siliconkautschukzusammensetzung, die mindestens ein eine Epoxygruppe enthaltendes Alkoxysilan und/oder Alkoxysiloxan sowie einen Vernetzer mit mindestens 20 SiH-Gruppen enthält, unter der Maßgabe, dass das Verhältnis SiH:SiVi mindestens 1,5 beträgt. Als besonders bevorzugt eingesetztes Additiv wird das Glycidoxypropyltrimethoxysilan (Glymo^{®}) beschrieben, mit dem sich in Verbundmaterialien insbesondere mit einigen organischen Kunststoffen relativ hohe Haftfestigkeiten erzielen lassen. Die in EP0875536 in den Beispielen beschriebenen Vernetzer mit 30 SiH-Gruppen pro Molekül weisen jedoch den Nachteil auf, dass derartig hochfunktionelle Vernetzer zu einer erheblichen Verminderung der Lagerstabilität bedingt durch Viskositätsanstieg (Verstrammung) führen und damit letztlich auch die Verarbeitungsqualität der Siliconzusammensetzungen negativ beeinflusst wird. Ein entscheidender Nachteil der Verwendung von epoxyfunktionellen Alkoxysilanen/-siloxanen stellt die Abspaltung der Alkoholgruppe(n), die Verwendung von reaktiven und polaren Gruppen und im Falle der funktionellen Alkoxysilane das Problem von "Ausblühungen" und "Ausschwitzen" dar. Die Abspaltung des Alkohol kann zum einen abträglich für eine gute Haftung sein, da der Alkohol sich an der Oberfläche des Silicons anreichert und damit auch an der Grenzfläche zum Substrat, wodurch der Kontakt zwischen Silicon- und Substratoberfläche verschlechtert wird. Des Weiteren werden bevorzugt Methoxysilane eingesetzt, welche das als giftig eingestufte Methanol freisetzen. Mit dem frei werden von flüchtigen Spaltprodukten (Alkoholabspaltung) wird zudem eine nicht unerhebliche Schrumpfung des Siliconelastomers beobachtet, die in der Regel unerwünscht ist.

EP1106662 beschreibt selbsthaftende additionsvernetzende Siliconzusammensetzungen, die eine Organosiliciumverbindung, die sowohl eine Epoxy- als auch eine hydrolysierbare Gruppe enthält, und ein Organohydrogenpolysiloxan, das wenigstens einen aromatischen C₆-Ring aufweist, enthalten und zu einer sehr guten Haftfestigkeit auf zahlreichen organischen Kunststoffen und verschiedenen Metallen führt. Dabei fungiert das Organohydrogenpolysiloxan sowohl als Haftvermittler als auch als Vernetzer. Die in EP 1106662 beschriebenen Zusammensetzungen weisen jedoch den Nachteil auf, dass die angegebenen Additive einerseits aufgrund ihrer relativ hohen Reaktivität einen beschleunigten SiH-Abbau herbeiführen und zudem die Vernetzungsgeschwindigkeit herabgesetzt wird (Inhibierungseffekt).

EP1510553 offenbart selbsthaftende additionsvernetzende Siliconkautschukzusammensetzungen, die (A) ein Organohydrogenpolysiloxan, (C) eine haftvermittelnde Verbindung der allgemeinen Formel (R¹²)₅Ph-Xᵣ-Ph(R¹²)₅ und als zusätzlichen Haftvermittler (D) ein wenigstens eine endständige SiH-Gruppe tragendes Organopolysiloxan enthält. Diese Zusammensetzungen weisen jedoch den Nachteil auf, dass Si-H-endständige Polymere, die häufig auch zur Kettenverlängerung eingesetzt werden, einen negativen Einfluss auf die Verarbeitungsqualität im Spritzgießprozess haben, was sich in einem engeren Verarbeitungsfenster bemerkbar macht.

EP0601883 beschreibt selbsthaftende additionsvernetzende Siliconkautschukzusammensetzungen, die eine Silan- oder Siloxangruppe als Haftvermittler enthalten, die wenigstens eine aromatische Gruppe sowie wenigstens eine SiH-Funktion enthalten. Die beschriebenen selbsthaftenden additionsvernetzenden Siliconkautschukzusammensetzungen zeichnen sich durch eine gute Haftung auf den angegebenen organischen Kunststoffen und eine geringe Haftfestigkeit auf Metallen aus. Die lagerstabile Herstellung der in den Beispielen aufgeführten Haftvermittler ist jedoch als grundsätzlich sehr aufwendig und daher kostenintensiv anzusehen, was sich letztlich in einer verminderten Wirtschaftlichkeit niederschlägt.

EP0686671A2 beschreibt eine selbsthaftende additionsvernetzende Siliconzusammensetzung, die keine speziellen Haftvermittler verwendet, da der haftvermittelnde Bestandteil entweder ein Organohydrogenpolysiloxan ist, welches durchschnittlich pro Molekül mindestens zwei SiH-Gruppen besitzt und dessen monovalente Si-gebundene Reste zu mindestens 12 Mol.-% aus Kohlenwasserstoffresten mit einem aromatischen Ring bestehen, oder eine solche Verbindung ist, die durchschnittlich pro Molekül mindestens eine SiH-Gruppe besitzt und die eine Gruppe bestehend aus zwei aromatischen Ringen enthält, wobei die beiden aromatischen Ringe durch -R¹³R¹⁴Si-, -R¹³R¹⁴SiO-, - OR¹³R¹⁴SiO- oder -R¹³R¹⁴SiOR¹³R¹⁴Si- voneinander getrennt sind und die Reste R¹³ und R¹⁴ einwertige Kohlenwasserstoffreste darstellen. Der haftvermittelnde Bestandteil kann also zugleich der Vernetzer der Siliconelastomermasse sein. Mit dieser Zusammensetzung wird eine gute Haftung auf organischen Kunststoffen, insbesondere Acrylnitril-Butadien-StyrolCopolymer (ABS) erzielt, aber gleichzeitig eine leichte Entformbarkeit von Metallen zeigt. Der hohe Gehalt an aromatischen Ringe enthaltenden Resten in dem SiH-haltigen, haftvermittelnden Bestandteil von mehr als 12 Mol.-% bedingt jedoch eine erhebliche Unverträglichkeit mit den übrigen Bestandteilen der additionsvernetzenden Siliconelastomermasse. Dies führt einerseits zu einer teilweisen Entmischung (Ausschwitzen) während der Lagerung, was ein wiederholtes Homogenisieren der diesen Bestandteil enthaltenden Komponente vor Gebrauch erforderlich macht. Diese Unverträglichkeit, die sich bereits an einer milchigen Trübung der unvernetzten Masse zeigt, manifestiert sich auch in einer deutlich verminderten Transparenz der daraus hergestellten Siliconelastomerteile. Fungiert der haftvermittelnde Bestandteil zugleich als Vernetzer der Siliconzusammensetzung, führt die Unverträglichkeit zu Vulkanisationsstörungen, die zu inhomogener Netzwerkbildung und mangelhaften mechanischen Vulkanisateigenschaften führen. Um diese Vulkanisationsstörungen zu umgehen, muss zusätzlich zum haftvermittelnden SiH-haltigen Bestandteil ein mit der Siliconzusammensetzung vollständig verträglicher SiH-haltiger Vernetzer eingesetzt werden, was allerdings andere Nachteile, beispielsweise erhöhte Werte des Druckverformungsrestes und erhöhte Ausschwitztendenz des haftvermittelnden Bestandteils, zur Folge hat. Der hohe Gehalt an aromatischen Ringen enthaltenden Resten in dem SiH-haltigen, haftvermittelnden Bestandteil von mehr als 12 Mol.-% verursacht auch eine starke Strukturviskosität der Siliconelastomermasse, die in zahlreichen Anwendungen, beispielsweise im Spritzguss von Flüssigsiliconkautschuk, unerwünscht ist.

In EP0728825B1 werden selbsthaftende Siliconkautschuke beschrieben, welche als Vernetzer R₃Si(OSi(R)H)ₙOSiR₃, - (OSi(R)H)ₙ- oder R₄₋₁ Si(OSi(R)₂H)₁ mit n mindestens 3 und 1 = 3 oder 4 und einen speziellen Haftvermittler enthalten. Es werden damit explizit keine Copolymere beschrieben, die H(R)SiO_{2/2}- und (R)₂SiO_{2/2}-Einheiten enthalten. Bei dem angegebenen Haftvermittler handelt es sich um eine Verbindung, welche mindestens eine aliphatisch ungesättigte Gruppe und mindestens zwei Phenylengruppen enthält.

DE102007044789 beschreibt selbsthaftende additionsvernetzende Siliconzusammensetzungen, welche sehr gute Haftung auf technischen insbesondere Bisphenol-A basierten Kunststoffen zeigen. Hierbei kommt als Haftvermittler eine Mischung aus zyklischen Organohydrogensiloxanen und einer Verbindung mit mindestens zwei Phenyl-Einheiten und einer Alkenyleinheit zum Einsatz.

Nach dem Stand der Technik ist eine Vielzahl von selbsthaftenden vernetzbaren Siliconzusammensetzungen bekannt. Problematisch ist jedoch die Tatsache, dass die Mehrheit der beschriebenen haftungsverbessernden Additive, welche den Siliconmassen zugesetzt werden, Phenyl- oder Alkoxysilylgruppen enthalten und diese bzw. deren Hydrolyseprodukte damit toxisch bzw. gesundheitsgefährdend sind. Dadurch ist deren Einsatz auf technische Materialien beschränkt. Für medizinische, kosmetische oder lebensmittelnahe Anwendungen sind diese Materialien ungeeignet.

Ein Gegenstand der Erfindung sind additionsvernetzende Siliconzusammensetzungen (S), enthaltend
(A) mindestens ein Diorganopolysiloxan der allgemeinen Formel (I)

   R¹ₐR²_{b}SiO_{(4-a-b)/2} (I),

   in der
   - **R¹**: Hydroxylrest oder einen monovalenten, unsubstituierten oder halogensubstituierten Kohlenwasserstoffrest mit 1 bis 20 Kohlenstoffatomen, der frei von aliphatisch ungesättigten Gruppen ist und O-, N-, S-, oder P-Atome enthalten kann,
   - **R²**: einen monovalenten, aliphatisch ungesättigten, unsubstituierten oder halogensubstituierten Kohlenwasserstoffrest mit 2 bis 10 Kohlenstoffatomen, der O-, N-, S-, oder P-Atome enthalten kann und
   - **b**: Werte von 0, 0001 bis 2 bedeuten, mit der Maßgabe, dass 1,5<(**a**+**b**)≤3,0, und dass pro Molekül durchschnittlich mindestens zwei aliphatisch ungesättigte Reste **R²** enthalten sind und dass die bei 25°C bestimmte Viskosität der Diorganopolysiloxane (A) 1 bis 40 000 000 mPa*s beträgt,
(B) mindestens ein cyclisches Organohydrogenpolysiloxan der allgemeinen Formel (II),

   (SiHR⁷O)_{g} (SiR⁸R⁹O)ₕ (II),

   wobei
   - **R⁷**: Wasserstoff oder die Bedeutungen von **R⁸**, und **R⁸ und R⁹** (a) einen monovalenten aliphatisch gesättigten Kohlenwasserstoffrest mit 1 bis 20 Kohlenstoffatomen, oder
   (b) einen unsubstituierten oder halogensubstituierten monovalenten Kohlenwasserstoffrest mit 6 bis 20 Kohlenstoffatomen, welcher mindestens einen aromatischen C₆-Ring enthält, oder
   (c) einen monovalenten cycloaliphatischen unsubstituierten oder halogensubstituierten Kohlenwasserstoffrest mit 3 bis 20 Kohlenstoffatomen, oder
   (d) einen halogensubstituierten, gesättigten, monovalenten Kohlenwasserstoffrest mit 2 bis 20 Kohlenstoffatomen, der O-, N-, S-, oder P-Atome enthalten kann, oder (e) einen Si-Atome enthaltenden linearen, cyclischen oder verzweigten Rest der ein oder mehrere Si-gebundene Wasserstoffatome enthalten kann, bedeuten,
   - **g**: eine Zahl größer oder gleich 1, und
   - **h**: 0 oder eine positive Zahl, bevorzugt 0, 1, 2 und besonders bevorzugt 0, bedeuten, mit der Maßgabe, dass die Summe aus **g** und **h** eine Zahl größer oder gleich 4 ist,
(C) mindestens einen Haftvermittler der allgemeinen Formel (III) 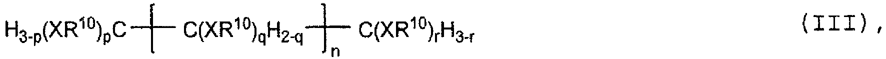 wobei
   - **R¹⁰**: Wasserstoffatom oder einen linearen, verzweigten oder zyklischen aliphatischen Kohlenwasserstoffrest mit 1 - 30 Kohlenstoffatomen, der eine oder mehrere C=C-Doppelbindungen und funktionelle Gruppen **Y** enthalten kann,
   - **X**: ausgewählt wird aus -CH₂-, -C(=O)-, -O-C(=O)-, -O-, -NH-C(=O)- und -NH-C(=O)-O-,
   - **Y**: ausgewählt wird aus Carbdnyl, Ethern, Estern, Carbonsäuren, Amiden, Säureamiden, Carbamaten, Harnstoffen, Urethanen und Alkoholen,
   - **n**: 0 oder eine positive Zahl,
   - **p** und **r**: eine Zahl 0, 1, 2 oder 3 und
   - **q**: eine Zahl 0, 1 oder 2 bedeuten,
   mit der Maßgabe, dass der Haftvermittler (C) mindestens zwei C=C-Doppelbindungen enthält, und
(D) mindestens einen Hydrosilylierungskatalysator.

Die additionsvernetzenden Siliconzusammensetzungen (S) weisen eine hervorragende Haftung auf gängigen technischen insbesondere, auf Bisphenol-A basierenden Polymeren auf. Gleichzeitig enthalten sie keine toxischen Bestandteile und erfüllen somit die Auflagen für medizinische, kosmetische oder lebensmittelnahe Anwendungen.

In den additionsvernetzenden Siliconzusammensetzungen (S) können die Komponenten (A), (B),(C) und (D) eine Verbindung oder eine Mischung verschiedener Verbindungen sein.

Beispiele für die Reste **R¹** sind Alkylreste, wie Methyl-, Ethyl-, Propyl-, Isopropyl-, tert.-Butyl-, n-Pentyl-, iso-Pentyl-, neo-Pentyl-, tert.-Pentyl-, n-Octyl-, 2-Ethylhexyl-, 2,2,4-Trimethylpentyl-, n-Nonyl- und Octadecylrest; Cycloalkylreste, wie Cyclopentyl-, Cyclohexyl-, Cycloheptyl-, Norbornyl-, Adamantylethyl- oder Bornylrest; Aryl- oder Alkarylreste, wie Phenyl-, Ethylphenyl-, Tolyl-, Xylyl-, Mesityl- oder Naphthylrest; Aralkylreste, wie Benzyl-, 2-Phenylpropyl- oder Phenylethylrest, sowie halogenierte und mit organischen Gruppen funktionalisierte Derivate der voranstehenden Reste, wie 3,3,3-Trifluorpropyl-, 3-Iodopropyl-, 3-Isocyanatopropyl-, Aminopropyl-, Methacryloxymethyl- oder Cyanoethylrest. Bevorzugte Reste **R¹** enthalten 1 bis 10, insbesondere 1 bis 6 Kohlenstoffatome sowie gegebenenfalls Halogensubstituenten. Besonders bevorzugte Reste **R¹** sind Methyl-, Phenyl- und 3,3,3-Trifluorpropylrest, insbesondere der Methylrest.

Die Reste **R²** sind einer Hydrosilylierungsreaktion zugänglich. Beispiele hierfür sind Alkenyl- und Alkinylreste, wie Vinyl-, Allyl-, Isopropenyl-, 3-Butenyl-, 2,4-Pentadienyl-, Butadienyl-, 5-Hexenyl-, Undecenyl-, Ethinyl-, Propinyl- und Hexinylrest; Cycloalkenylreste, wie Cyclopentenyl-, Cyclohexenyl-, 3-Cyclohexenylethyl-, 5-Bicycloheptenyl-, Norbornenyl-, 4-Cyclooctenyl- oder Cyclooctadienylrest; Alkenylarylreste, wie Styryl- oder Styrylethylrest, sowie halogenierte und Heteroatome enthaltende Derivate der voranstehenden Reste, wie 2-Bromvinyl-, 3-Brom-1-propinyl-, 1-Chlor-2-methylallyl-, 2-(Chlormethyl)allyl-, Styryloxy-, Allyloxypropyl-, 1-Methoxyvinyl-, Cyclopentenyloxy-, 3-Cyclohexenyloxy-, Acryloyl-, Acryloyloxy-, Methacryloyl- oder Methacryloyloxyrest, Bevorzugte Reste R² sind Vinyl-, Allyl- und 5-Hexenylrest, insbesondere der Vinylrest.

Bei den Diorganopolysiloxanen (A) der allgemeinen Formel (I) beträgt die bei 25°C bestimmte Viskosität vorzugsweise 10 bis 1 000 000 mPa*s. Je nach Art der selbsthaftenden additionsvernetzenden Siliconzusammensetzung (S) werden unterschiedliche Viskositätsbereiche für die Diorganopolysiloxane (A) bevorzugt. Für die als RTV-2 (Room Temperature Vulcanizing) bekannten Massen werden Viskositäten von 100 bis 10 000 mPa*s, für LSR (Liquid Silicone Rubber) von 1000 bis 500 000 mPa*s und für HTV (High Temperature Vulcanizing) von 2000 bis 40 000 Pa*s besonders bevorzugt.

Beispiele für Reste **R⁷, R⁸** und **R⁹** des cyclischen Organohydrogenpolysiloxans (B) der allgemeinen Formel (II), sind Si-gebundene Kohlenwasserstoffreste mit 1 bis 10, insbesondere 1 bis 6 Kohlenstoffatomen, insbesondere die für **R¹** genannten Alkyl-, Acryl- und Alkarylreste. Bevorzugte Reste **R⁷, R⁸** und **R⁹** sind Si-gebundener Wasserstoff, Methyl-, Ethyl-, Propyl-, Butyl-, Octyl-, Cyclohexyl-, Phenyl- und 3,3,3-Trifluorpropylrest.

Besonders bevorzugte Reste **R⁷, R⁸** und **R⁹** sind Si-gebundener Wasserstoff, Methyl- und Phenylrest, wobei hiervon noch Si-gebundener Wasserstoff und die Methylgruppe die am meisten bevorzugten Reste sind.

Die cyclischen Organohydrogenpolysiloxane (B) sind vorzugsweise Copolymere enthaltend H(CH₃)SiO_{2/2}- und (CH₃)₂SiO_{2/2}-Einheiten, und Homopolymere enthaltend ausschließlich H(CH₃)SiO_{2/2}-Einheiten, sowie Mischungen daraus, wobei die Homooligomere noch bevorzugter sind.

Besonders bevorzugte Ausführungen der cyclischen Organohydrogenpolysiloxane (B) sind Homopolymere, wie Pentamethylcyclopentasiloxan (SiMe(H)O)₅ ; D₅^{H} oder Hexamethylcyclohexasiloxan (SiMe(H)O)₆; D₆^{H}, oder Heptamethylcycloheptasiloxan (SiMe(H)O)₇; D₇^{H}, oder Octamethylcyclooctasiloxan (SiMe(H)O)₈, D₈^{H}, bedeuten, oder Mischungen aus den Homopolymeren.

Mischungen dieser bevorzugten Ausführungen der cyclischen Organohydrogenpolysiloxane (B) enthalten vorzugsweise vergleichsweise geringe Mengen Homopolymere wie Trimethylcyclotrisiloxan (SiMe(H)O)₃ ; D₃^{H} und Tetramethylcyclotetrasiloxan (SiMe(H)O)₄; D₄^{H}, oder Mischungen daraus, so dass der Anteil der Summe dieser Homopolymere in besagtem cyclischen Organohydrogenpolysiloxan (B) vorzugsweise weniger als 20 Gew.- %, besonders bevorzugt weniger als 10 Gew.-% ausmacht.

Eine weitere bevorzugte Ausführungsform des cyclischen Organohydrogenpolysiloxans (B) ist eine Verbindung der allgemeinen Formel (II), mit der Maßgabe, dass die Summe aus **g** und **h** eine Zahl größer oder gleich 5 und vorzugsweise höchstens 20, insbesondere höchstens 10 ist.

In einer weiteren bevorzugten Ausführungsform ist das cyclische Organohydrogenpolysiloxan (B) der allgemeinen Formel (II) frei von aromatischen Gruppen.

Neben cyclische Organohydrogenpolysiloxan (B) kann die additionsvernetzende Siliconzusammensetzung (S) zusätzlich (E) mindestens ein Organohydrogenpolysiloxan der allgemeinen Formel (IV)

R3_{c}R⁴_{d}R⁵ₑH_{f}SiO_{(4-c-d-2e-f)/2} (IV),

enthalten, wobei
- **R³**: einen monovalenten aliphatisch gesättigten Kohlenwasserstoffrest mit 1 bis 20 Kohlenstoffatomen,
- **R⁴**: (a) einen monovalenten, unsubstituierten oder halogensubstituierten Kohlenwasserstoffrest mit 6 bis 15 Kohlenstoffatomen, welcher mindestens einen aromatischen C₆-Ring enthält, oder (b) einen monovalenten, unsubstituierten oder halogensubstituierten, gesättigten Kohlenwasserstoffrest mit 2 bis 20 Kohlenstoffatomen, in dem einzelne Kohlenstoffatome durch O-, N-, S- oder P-Atome ersetzt sein können,
- **R⁵**: einen beidseitig Si-gebundenen bivalenten, unsubstituierten oder halogensubstituierten Kohlenwasserstoffrest mit 6 bis 20 Kohlenstoffatomen, in dem einzelne Kohlenstoffatome durch O-, N-, S-, oder P-Atome ersetzt sein können,
- **c** und **f**: positive Zahlen bedeuten, und
- **d** und **e**: Null oder eine positive Zahl bedeuten,
mit der Maßgabe, dass die Summe (c+d+2e+f) ≤ 3 ist, das Organohydrogenpolysiloxan (E) pro Molekül durchschnittlich
mindestens 3 SiH-Gruppen enthält, und
dass die bei 25°C bestimmte Viskosität des
Organohydrogenpolysiloxans (E) 5 mPa*s bis 5 000 mPa*s beträgt, und dass das Organohydrogenpolysiloxan (E) nicht ein cyclisches Organohydrogenpolysiloxan der allgemeinen Formel (SiHR⁷O)_{g} (SiR⁸R⁹O)ₕ ist.

Beispiele für **R³** sind Alkylreste, wie vorstehend für **R¹** aufgeführt. Bevorzugte Reste **R³** sind Kohlenwasserstoffreste mit 1 bis 10 Kohlenstoffatomen. Besonders bevorzugter Rest **R³** ist der Methylrest.

Beispiele für **R⁴** sind vorstehend für **R¹** aufgeführt. Bevorzugte Reste **R⁴** sind der Phenylrest und der 3,3,3-Trifluorpropylrest. Besonders bevorzugter Rest **R⁴** ist der Phenylrest.

Bevorzugte Reste **R⁵**, entsprechen der allgemeinen Formel (Z)

-(O)_{g}-(R⁶)ₜ-(O)ᵤ-(M)_{w}-(O)ᵤ-(R⁶)ₜ-(O)ₛ (Z),

wobei
- **s**, **t**, **u** und **w**: die Werte 0, 1 oder 2 sind,
- **R⁶**: einen bivalenten, unsubstituierten oder halogensubstituierten Kohlenwasserstoffrest mit 1 bis 10 Kohlenstoffatome, der frei von aliphatisch ungesättigten Gruppen und in dem einzelne Kohlenstoffatome durch O-, N-, S-, oder P-Atome ersetzt sein können, wie beispielsweise -CH₂-, -CH₂-CH₂-, -CH₂-CH₂-CH₂-, -CF₂--, -CH₂-CF₂-, -CH₂-CH(CH₃) -, -C(CH₃)₂-, -CH₂-C(CH₃)₂- , -C(CH₃)₂-CH₂- , - CH₂-CH₂-O- oder -CF₂-CF₂-O-, und
- **M**: einen bivalenten Rest wie -Ph-, -Ph-O-Ph-, -Ph-S-Ph-, -Ph-SO₂-Ph-, -Ph-C(CH₃)₂-Ph-, -Ph-C (CF₃)₂-Ph-, -Ph-C(O) -Ph-, Cyclohexylen oder Norbornylen, wobei **Ph** eine Phenylengruppe bezeichnet, bedeuten.

Besonders bevorzugter Rest **R⁵ ist** der Phenylenrest und der Norbornylenrest.

Beispiele der Organohydrogenpolysiloxane (E) der allgemeinen Formel (IV) sind lineare und verzweigte Organohydrogenpolysiloxane, wobei diese vorzugsweise aus Einheiten der Formeln (CH₃)₃SiO_{1/2}, H(CH₃)₂SiO_{1/2}, H(CH₃)SiO_{2/2}, (CH₃) (C₆H₅)SiO_{2/2}, (C₆H₅)₂SiO_{2/2}, (C₆H₅)SiO_{3/2}, (CH₃)₂SiO_{2/2} oder O_{1/2}(CH₃)₂Si-C₆H₄-(CH₃)₂SiO_{1/2}, oder aus deren Mischungen bestehen.

Als Organohydrogenpolysiloxane (E) der allgemeinen Formel (IV) sind lineare und verzweigte Organohydrogenpolysiloxane besonders bevorzugt, die aus Einheiten der Formeln (CH₃)₃SiO_{1/2}, H(CH₃)SiO_{2/2}, und (CH₃)₂SiO_{2/2} oder aus Mischungen verschiedener solcher Organohydrogenpolysiloxane bestehen.

Das Organohydrogenpolysiloxan (E) der allgemeinen Formel (IV) enthält pro Molekül vorzugsweise durchschnittlich 5 bis 40 SiH-Gruppen. Besonders bevorzugt sind durchschnittlich 10 bis 25 SiH-Gruppen pro Molekül.

In einer besonders bevorzugten Ausführungsform ist das Organohydrogenpolysiloxan (E) der allgemeinen Formel (IV) frei von aromatischen Gruppen.

Die bei 25°C gemessene Viskosität des Bestandteils (E) beträgt vorzugsweise 2 bis 1000 mPa*s.

Aufgrund der nach dem Stand der Technik gängigen Syntheserouten sowie aufgrund der inhärenten Labilität von SiH-Gruppen, insbesondere bei höheren Temperaturen und/oder bei Gegenwart geeigneter Katalysatoren und Reaktionspartner, kann der Bestandteil (E) einen geringen Gehalt, typischerweise kleiner als 100 Gew.-ppm, Si-gebundener OH-Gruppen aufweisen.

Bevorzugte Ausführungen der Organohydrogenpolysiloxane (E) sind beispielsweise
Copolymere enthaltend H(CH₃)SiO_{2/2}- und (CH₃)₂SiO_{2/2}-Einheiten aufweisend (CH₃)₃SiO_{1/2}-Endgruppen,
Copolymere enthaltend H(CH₃)SiO_{2/2}- und (CH₃)₂SiO_{2/2}-Einheiten aufweisend H (CH₃)₂SiO_{1/2}-Endgruppen,
Copolymere enthaltend (Ph)₂SiO_{2/2}- und H(CH₃)SiO_{2/2}-Einheiten aufweisend (CH₃) ₃Si0_{1/2}-Endgruppen,
Copolymere enthaltend (Ph)₂SiO_{2/2}-, (CH₃)₂SiO_{2/2}- und H(CH₃)Si_{2/2}-Einheiten aufweisend (CH₃)₃SiO_{1/2}-Endgruppen,
Copolymere enthaltend (Ph)SiO_{3/2-}, (CH₃)₂SiO_{2/2}- und H(CH₃)Si_{2/2}-Einheiten aufweisend (CH₃)₃SiO_{1/2}-Endgruppen,
Copolymere enthaltend (Ph) (CH₃)SiO_{2/2}-, (CH₃)₂SiO_{2/2}- und H(CH₃)Si_{2/2}-Einheiten aufweisend (CH₃)₃SiO_{1/2}-Endgruppen, Copolymere enthaltend (Ph) (CH₃)SiO_{2/2-}, (CH₃)₂SiO_{2/2}- und H(CH₃)Si_{2/2}-Einheiten aufweisend H(CH₃)₂SiO_{1/2}-Endgruppen, Copolymere enthaltend (Ph) (CH₃)SiO_{2/2}- und H(CH₃)Si_{2/2}-Einheiten aufweisend (CH₃)₃SiO_{1/2}-Endgruppen,
Copolymere enthaltend -Si(CH₃)₂-C₆H₄-Si(CH₃)₂O_{2/2}-, (CH₃)₂SiO_{2/2}- und H(CH₃)HSiO_{1/2}-Einheiten, und
Copolymere enthaltend -Si(CH₃)₂-C₆H₄-Si(CH₃)₂O_{2/2}- und
(CH₃) HSiO_{2/2}-Einheiten.

Besonders bevorzugte Ausführungen der
Organohydrogenpolysiloxane (E) sind beispielsweise
Copolymere enthaltend H(CH₃)SiO_{2/2-} und (CH₃)₂SiO_{2/2}-Einheiten aufweisend (CH₃)₃SiO_{1/2}-Endgruppen, und
Copolymere enthaltend H(CH₃)SiO_{2/2}- und (CH₃)₂SiO_{2/2}-Einheiten aufweisend H(CH₃)₂SiO_{1/2}-Endgruppen.

Des Weiteren sind Organohydrogenpolysiloxane (E) besonders bevorzugt, die aus -Si(CH₃)H-O- und -Si(CH₃)₂-O-Einheiten mit einem Molverhältnis von 3 : 1 aufweisend (CH₃)₃Si-O-Endgruppen, oder aus -Si(CH₃)H-O- und -Si(CH₃)₂-O-Einheiten mit einem Molverhältnis von 1 : aufweisend (CH₃)₃Si-O-Endgruppen, oder aus -Si(CH₃)H-O- und -Si(CH₃)₂-O-Einheiten mit einem Molverhältnis von 1 : 2 aufweisend (CH₃)₃Si-O-Endgruppen, bestehen.

Bevorzugt liegt das Verhältnis von SiH aus Komponente (E) zur Gesamtzahl an Si-Vinyl-gebundenen Gruppen in der selbsthaftenden additionsvernetzenden Siliconzusammensetzung zwischen 0,5 und 5 und besonders bevorzugt zwischen 0,6 und 1,8.

Der Haftvermittler (C) der allgemeinen Formel (III) ist eine Verbindung mit zumindest zwei aliphatisch ungesättigten Gruppen pro Molekül. Der Haftvermittler (C) steigert in Kombination mit dem cyclischen Organohydrogenpolysiloxan (B) und gegebenenfalls mit dem Organopolysiloxan (E) die Adhäsion der Zusammensetzung, die des Weiteren die Komponente (A) enthält, so dass mit der Zusammensetzung eine herausragende Haftfestigkeit auf den gewünschten Substraten erzielt wird. Des Weiteren ist der Haftvermittler (C) sowie dessen Hydrolyseprodukte toxikologisch unbedenklich und erfüllt die Anforderungen der FDA und BfR.

**X** wird vorzugsweise mindestens einmal pro Molekül ausgewählt aus -C(=O)", -O-C(=O)-, -O-, NH-C(=O)- und -NH-C(=O)-O-. In einer besonders bevorzugten Ausführung entspricht die Gruppe **X** -O- bzw. -O-C(=O)-

In einer bevorzugten Ausführung handelt es sich bei den funktionellen Gruppen **Y** um Ether, Ester, Carbonsäuren, Alkohole und Amide.

Die Alkylgruppen **R¹⁰** weisen vorzugsweise höchstens 16, insbesondere höchstens 12 Kohlenstoffatome auf. Die Alkenylgruppen **R¹⁰ weisen** vorzugsweise mindestens 2 und höchstens 22, besonders bevorzugt höchstens 16, insbesondere höchstens 12 Kohlenstoffatome auf.

Beispiele für Alkylgruppen **R¹⁰** sind vorstehend bei **R¹** genannt. Beispiele für Alkenylreste **R¹⁰** sind vorstehend bei **R²** genannt.

Bevorzugte Ausführungsformen der Reste **R¹⁰** sind Fettsäure- bzw. Fettalkoholreste wie z.B. der Lauryl-, Myristyl-, Cetyl-, Stearyl-, Arachinyl, Ricinolyl-, Undecylenyl-, Palmitoleinyl-, Oleyl-, Erucayl-, Linolyl-, Linolenyl- und Arachidonylrest.

In der allgemeinen Formel (III) des Haftvermittlers (C) bedeutet der Index **n** bevorzugt Null oder eine positive Zahl von höchstens 10, besonders bevorzugt höchstens 2, insbesondere 0 oder 1.

Die Indizes **p** und **r** bedeuten bevorzugt Null bis 2, besonders bevorzugt Null oder 1.

Der Index **q** bedeutet bevorzugt Null oder 1.

Besonders bevorzugte Ausführungsformen des Haftvermittlers (C) sind Ester von Ethylenglykol und Glycerin mit einfach, zweifach oder dreifach ungesättigten Fettsäuren mit mindestens 4, insbesondere mindestens 6 und höchstens 30, insbesondere höchstens 20 Kohlenstoffatomen.

Für die Wirksamkeit des Haftvermittlers (C) ist es wesentlich, dass dieser in Kombination mit dem cyclischen Organohydrogenpolysiloxan (B) zum Einsatz kommt. Nur dann wird überraschenderweise eine sehr gute Haftung auf insbesondere Bisphenol A-haltigen Thermoplasten beobachtet.

Der Hydrosilylierungskatalysator (D) dient als Katalysator für die als Hydrosilylierung bezeichnete Additionsreaktion zwischen den aliphatisch ungesättigten Kohlenwasserstoffresten **R²** der Diorganopolysiloxane (A) und den ungesättigten Gruppen des Haftvermittlers (C) mit den Si-gebundenen Wasserstoffatomen der cyclischen Organohydrogenpolysiloxane (B) und gegebenenfalls der Organohydrogensiloxane (E). In der Literatur sind zahlreiche geeignete Hydrosilylierungskatalysatoren beschrieben. Prinzipiell können alle dem Stand der Technik entsprechenden und in additionsvernetzenden Siliconkautschukmassen eingesetzten Hydrosilylierungskatalysatoren verwendet werden.

Als Hydrosilylierungskatalysator (D) können beispielsweise Metalle und deren Verbindungen, wie Platin, Rhodium, Palladium, Ruthenium und Iridium, vorzugsweise Platin und Rhodium, eingesetzt werden. Die Metalle können gegebenenfalls auf feinteiligen Trägermaterialien, wie Aktivkohle, Metalloxiden, wie Aluminiumoxid oder Siliciumdioxid, fixiert sein. Vorzugsweise werden Platin und Platinverbindungen verwendet. Besonders bevorzugt werden solche Platinverbindungen, die in Polyorganosiloxanen löslich sind. Als lösliche Platinverbindungen können beispielsweise die Platin-Olefin-Komplexe der Formeln (PtCl_{2·}Olefin)₂ und H(PtCl_{3·}Olefin) verwendet werden, wobei bevorzugt Alkene mit 2 bis 8 Kohlenstoffatomen, wie Ethylen, Propylen, Isomere des Butens und Octens, oder Cycloalkane mit 5 bis 7 Kohlenstoffatomen, wie Cyclopenten, Cyclohexen und Cyclohepten, eingesetzt werden. Weitere lösliche Platin-Katalysatoren sind der Platin-Cyclopropan-Komplex der Formel (PtCl₂C₃H₆)₂, die Umsetzungsprodukte von Hexachloroplatinsäure mit Alkoholen, Ethern und Aldehyden bzw. Mischungen derselben oder das Umsetzungsprodukt von Hexachloroplatinsäure mit Methylvinylcyclotetrasiloxan in Gegenwart von Natriumbicarbonat in ethanolischer Lösung. Auch Platin-Katalysatoren mit Phosphor-, Schwefel- und Aminliganden können verwendet werden, z.B. (Ph₃P)₂PtCl₂. Besonders bevorzugt sind Komplexe des Platins mit Vinylsiloxanen, wie sym-Divinyltetramethyldisiloxan.

Die Menge des eingesetzten Hydrosilylierungskatalysators (D) richtet sich nach der gewünschten Vernetzungsgeschwindigkeit sowie ökonomischen Gesichtpunkten. Üblicherweise werden pro 100 Gew.-Teile Diorganopolysiloxane (A) 1 x 10⁻⁵ bis 5 x 10⁻² Gew.-Teile, vorzugsweise 1 x 10-⁴ bis 1 x 10⁻² und insbesondere 5 x 10⁻⁴ bis 5 x 10⁻³ Gew.-Teile Platin-Katalysatoren, berechnet als Platin-Metall eingesetzt.

Damit eine ausreichend hohe mechanische Festigkeit des vernetzten Siliconkautschuks erzielt werden kann, ist es bevorzugt, aktiv verstärkende Füllstoffe (F) als Bestandteil in die additionsvernetzenden Siliconzusammensetzungen (S) einzuarbeiten. Als aktiv verstärkende Füllstoffe (F) werden vor allem gefällte und pyrogene Kieselsäuren, sowie Gemische derselben verwendet. Die spezifische Oberfläche dieser aktiv verstärkenden Füllstoffe sollte mindestens 50 m²/g betragen oder vorzugsweise im Bereich von 100 bis 400 m²/g gemäß der Bestimmung nach der BET-Methode liegen. Derartige aktiv verstärkende Füllstoffe sind auf dem Gebiet der Siliconkautschuke sehr gut bekannte Materialien.

Die genannten Kieselsäurefüllstoffe können hydrophilen Charakter haben oder nach bekannten Verfahren hydrophobiert sein. Beim Einmischen hydrophiler Füllstoffe ist die Zugabe eines Hydrophobierungsmittels erforderlich.

Der Gehalt der Siliconzusammensetzungen (S) an aktiv verstärkendem Füllstoff (F) liegt im Bereich von 0 bis 70 Gew.-%, vorzugsweise bei 0 bis 50 Gew.-%.

Des Weiteren können Inhibitoren (G) als weiterer Zusatz enthalten sein, die der gezielten Einstellung der Verarbeitungszeit, Anspringtemperatur und Vernetzungsgeschwindigkeit der Siliconzusammensetzungen (S) dienen. Diese Inhibitoren (G) sind auf dem Gebiet der additionsvernetzenden Massen ebenfalls gut bekannt. Beispiele gebräuchlicher Inhibitoren sind acetylenische Alkohole, wie 1-Ethinyl-1-cyclohexanol, 2-Methyl-3-butin-2-ol und 3,5-Dimethyl-1-hexin-3-ol, 3-Methyl-1-dodecin-3-ol, Polymethylvinylcyclosiloxane, wie beispielsweise 1,3,5,7-Tetravinyltetramethyltetracyclosiloxan, niedermolekulare Siliconöle enthaltend (CH₃)(CHR=CH)SiO_{2/2}-Gruppen und gegebenenfalls R₂(CHR=CH)SiO_{1/2}-Endgruppen, wie beispielsweise Divinyltetramethyldisiloxan, Tetravinyldimethyldisiloxan, Trialkylcyanurate, Alkylmaleate, wie beispielsweise Diallylmaleate, Dimethylmaleat und Diethylmaleat, Alkylfumarate, wie beispielsweise Diallylfumarat und Diethylfumarat, organische Hydroperoxide, wie beispielsweise Cumolhydroperoxid, tert.-Butylhydroperoxid und Pinanhydroperoxid, organische Peroxide, organische Sulfoxide, organische Amine, Diamine und Amide, Phosphane und Phosphite, Nitrile, Triazole, Diaziridine und Oxime. Die Wirkung dieser Inhibitoren (H) hängt von ihrer chemischen Struktur ab, so dass sie individuell bestimmt werden muss.

Der Gehalt an Inhibitoren in den Siliconzusammensetzungen (S) beträgt vorzugsweise 0 bis 50 000 ppm, besonders bevorzugt 20 bis 2000 ppm, insbesondere 100 bis 1000 ppm.

Die Siliconzusammensetzung (S) kann wahlweise als Bestandteil weitere Zusätze (H) zu einem Anteil von vorzugsweise bis zu 70 Gew.-%, bevorzugt 0,0001 bis 40 Gew.-%, enthalten. Diese Zusätze können beispielsweise inaktive Füllstoffe, Quarz, Talk, harzartige Polyorganosiloxane, Dispergierhilfsmittel, Lösungsmittel, weitere Haftvermittler, Pigmente, Farbstoffe, Weichmacher, organische Polymere, Hitzestabilisatoren usw. sein. Hierzu zählen Zusätze, wie Aktivkohle, Quarzmehl, Diatomeenerde, Tone, Kreide, Lithopone, Ruße, Graphit, Metalloxide, Metallcarbonate, -sulfate, Metallsalze von Carbonsäuren, Metallstäube, Fasern, wie beispielsweise Glasfasern, Kunststofffasern, Kunststoffpulver, Farbstoffe, Pigmente usw..

Optional können weitere Bestandteile (K), die in herkömmlichen selbsthaftenden additionsvernetzenden Siliconkautschukmassen eingesetzt werden, zugesetzt werden. Vorzugsweise handelt es sich hierbei um Organopolysiloxan-Verbindungen. Noch bevorzugter sind cyclische oder lineare Organopolysiloxan-Verbindungen mit mindestens einer SiH-Gruppe und mindestens einer Alkoxysilyl- und/oder Glycidylgruppe pro Molekül.

Üblicherweise enthält die Siliconzusammensetzung (S) 100 Gew.-Teile Diorganopolysiloxane (A) der allgemeinen Formel (I),
0,1 bis 30 Gew.-Teile mindestens eines cyclischen Organohydrogenpolysiloxans (B) der allgemeinen Formel (II), 0,05 bis 20 Gew.-Teile mindestens eines organischen Haftvermittlers (C) der allgemeinen Formel (III),
und eine katalytische Menge zumindest eines
Hydrosilylierungskatalysators (D), sowie gegebenenfalls
0,02 bis 9 Gew.-Teile mindestens eines
Organohydrogenpolysiloxans (E) der allgemeinen Formel (IV), 0 bis 100 Gew.-Teile mindestens eines verstärkenden Füllstoffs (F),
0 bis 5 Gew.-Teile mindestens eines Inhibitors (G), und
0 bis 60 Gewichtsteile weiterer Zusatzstoffe (H) und/oder (K).

Bevorzugt ist eine Zusammensetzung enthaltend
100 Gew.-Teile mindestens eines Diorganopolysiloxans (A) der allgemeinen Formel (I),
0,02 bis 3 Gew.-Teile mindestens eines cyclischen Organohydrogenpolysiloxans (B) der allgemeinen Formel (II), besonders bevorzugt 0,1 bis 1,5 Gew.-Teile, insbesondere 0,1 bis 0,9 Gew.-Teile,
0,07 bis 6 Gew.-Teile mindestens eines organischen Haftvermittlers (C) der allgemeinen Formel (III), insbesondere 0,1 bis 2 Gew.-Teile,
eine katalytische Menge zumindest eines
Hydrosilylierungskatalysators (D),
0,5 bis 10 Gew.-Teile mindestens eines
Organohydrogenpolysiloxans (E) der allgemeinen Formel (IV), besonders bevorzugt 1 bis 5 Gew.-Teile,
sowie gegebenenfalls
10 bis 50 Gew.-Teile eines verstärkenden Füllstoffs (F), insbesondere 20 bis 45 Gew.-Teile,
0,01 bis 0,5 Gew.-Teile mindestens eines Inhibitors (G), insbesondere 0,01 bis 0,2 Gew.-Teile, und
0 bis 60 Gewichtsteile weiterer Zusatzstoffe (H) und/oder (K).

Das Verhältnis der Gesamtmenge an Si-H-Gruppen zur Gesamtmenge der Si-Vinylgruppen kann in Bereichen von 0,5 bis 15 variieren, wobei 1,0 bis 7 bevorzugt ist und 1,2 bis 4,5 besonders bevorzugt ist.

Bevorzugt besteht die additionsvernetzende Siliconzusammensetzung (S) aus zwei Komponenten (i) und (ii), wobei die Komponente (i) die Bestandteile (A) und (D) sowie gegebenenfalls (C), und die Komponente (ii) die Bestandteile (A) und (B), gegebenenfalls (E) sowie gegebenenfalls (C) enthält, wobei (C) in beiden Teilen gleichzeitig enthalten sein kann, aber mindestens in einem der Teile enthalten sein muss, jedoch besonders bevorzugt in Teil (ii) enthalten ist. Die Bestandteile (F), (G), (H) und (K) können optional in beiden Komponenten (i) und (ii) vorhanden sein, wobei das Vorhandensein des Bestandteils (F) in beiden Komponenten sowie das Vorhandensein des Bestandteils (G) in beiden oder zumindest in einer der Komponenten (i) und (ii) bevorzugt ist.

Die Compoundierung der additionsvernetzenden Siliconzusammensetzungen (S) erfolgt durch Mischen der oben aufgeführten Komponenten (i) und (ii) in beliebiger Reihenfolge.

Die Vernetzung der Siliconzusammensetzungen (S) erfolgt durch Erwärmen, üblicherweise bei 40 bis 250°C, bevorzugt bei mindestens 50°C, besonders bevorzugt bei mindestens 80°C, bevorzugt bei höchstens 200°C, insbesondere bei höchstens 180°C.

Gegenstand der Erfindung sind auch additionsvernetzte Siliconelastomere, die aus den Siliconzusammensetzungen (S) hergestellt werden.

Ein weiterer Gegenstand der Erfindung ist ein Verfahren zur Herstellung additionsvernetzender Siliconzusammensetzungen (S) bei dem die Komponenten (A), (B), (C), (D) und gegebenenfalls (E) miteinander vermischt werden.

In einem bevorzugten Verfahren zur Herstellung der additionsvernetzenden Siliconzusammensetzungen (S) sind die Bestandteile (A), (B), (C), (D) und gegebenenfalls (E) in oben beschriebener Weise auf die zwei Komponenten (i) und (ii) aufgeteilt.

Vorzugsweise ist bei dem Verfahren zur Herstellung der Siliconzusammensetzungen (S) das cyclische Organohydrogenpolysiloxan (B) eine Verbindung der allgemeinen Formel (II), mit der Maßgabe, dass die Summe aus g und h eine Zahl größer oder gleich 5 ist.

Vorzugsweise ist bei dem Verfahren zur Herstellung von Siliconzusammensetzungen (S) das cyclische Organohydrogenpolysiloxan (B) der allgemeinen Formel (II) frei von aromatischen Gruppen.

Vorzugsweise enthält bei dem Verfahren zur Herstellung von Siliconzusammensetzungen (S) das Organohydrogenpolysiloxan (E) durchschnittlich 5 bis 40 SiH-Gruppen.

Vorzugsweise enthalten bei dem Verfahren zur Herstellung von Siliconzusammensetzungen (S) die Siliconzusammensetzungen (S) zusätzlich mindestens einen verstärkenden Füllstoff (F), mindestens einen Inhibitor (G), sowie gegebenenfalls weitere Zusatzstoffe (H) und/oder (K).

Vorzugsweise wird bei dem Verfahren zur Herstellung der Siliconzusammensetzungen (S) das Diorganopolysiloxan (A) mit mindestens einem Füllstoff (F), der gegebenenfalls hydrophobiert sein kann, vermischt und dieses gegebenenfalls anschließend mit weiterem Diorganopolysiloxan (A), Organohydrogenpolysiloxan (B) und gegebenenfalls (E), dem Hydrosilylierungskatalysator (D) und gegebenenfalls weiteren Bestandteilen (G), (H) und (K) vermischt. Das Vermischen erfolgt dabei vorzugsweise über diskontinuierliche und/oder kontinuierliche Mischaggregate, wie beispielsweise Kneter, Dissolver oder Planetenmischer.

Gegenstand der Erfindung ist zudem ein Verbundmaterial, bei dem wenigstens ein Teil des Verbundmaterials aus einem additionsvernetzenden Siliconelastomer besteht, das aus den Siliconzusammensetzungen (S) hergestellt wird, das mit wenigstens einem Substratmaterial fest verbunden ist.

Gegenstand der Erfindung ist zudem ein Verfahren zur Herstellung von Verbundmaterialien, bei dem die Siliconzusammensetzungen (S) auf das Substrat aufgebracht und anschließend durch Erwärmen auf 40 bis 250°C zu einem Verbundmaterial vernetzt wird.

Durch Vulkanisation der Siliconzusammensetzungen (S) auf einem Substrat oder zwischen wenigstens zwei Substraten können die Siliconzusammensetzungen (S) mit den Substraten verbunden werden, indem die Siliconzusammensetzungen (S) auf zumindest ein Substrat aufgebracht und anschließend vorzugsweise durch Erwärmen zu einem Verbundmaterial vernetzt wird.

Die Siliconzusammensetzungen (S) können insbesondere überall dort vorteilhaft eingesetzt werden, wo eine gute Haftfestigkeit zwischen dem additionsvernetzten Siliconelastomer und wenigstens einem Substrat, vorzugsweise bestehend aus organischen Kunststoffen und hier insbesondere technischen und Hochleistungsthermoplasten, wie Bisphenol-A-Einheiten enthaltenden Thermoplasten (beispielsweise Polycarbonaten und Polyetherimiden) sowie Polyamiden und Polyestern, Metallen oder Gläsern, erwünscht wird, Das Substrat kann als Formteil, Folie oder Beschichtung vorliegen.

Die Siliconzusammensetzungen (S) eignen sich zur Herstellung von Verbundmaterial durch Beschichten, Verkleben, Vergießen und zur Herstellung von Formartikeln. Die Siliconzusammensetzungen (S) eignen sich auch zum Verguss und zum Verkleben elektrischer und elektronischer Bauteile sowie zur Herstellung von Verbundformteilen. Unter Verbundformteilen wird hier ein einheitlicher Formartikel aus einem Verbundmaterial verstanden, der aus einem aus den Siliconzusammensetzungen (S) hergestellten Siliconelastomerteil und mindestens einem Substrat so zusammengesetzt ist, dass zwischen den Teilen eine feste, dauerhafte Verbindung besteht, Vorzugsweise erfolgt die Herstellung eines solchen Verbundformteils, indem ein organischer Kunststoff zu einem Formartikel verarbeitet wird und anschließend die Siliconzusammensetzung (S) mit diesem Formteil in Verbindung gebracht und vernetzt werden, was beispielsweise im Spritzgussverfahren, mittels Extrusion oder im sogenannten Pressvulkanisationsverfahren erfolgen kann. Verbundmaterialien und insbesondere Verbundformteile können in vielfältigsten Anwendungsbereichen zum Einsatz kommen, beispielsweise in der Elektronik-, Haushaltgeräte-, Gebrauchsgüter-, Bau- und Automobilindustrie, in der Medizintechnik, der Sport- und Freizeitartikelherstellung etc..

Die Verwendung einer Kombination des cyclischen Organohydrogenpolysiloxans (B) mit dem SiH-haltigen Vernetzer (E) ermöglicht die Aufrechterhaltung eines praxistauglichen mechanischen Eigenschaftsprofil, wobei der Anteil des cyclischen Organohydrogenpolysiloxans (B) ebenfalls vorzugsweise gering gehalten werden muss, falls Siliconelastomere mit einer Härte von mehr als 60 Shore A erhalten werden sollen.

Alle vorstehenden Symbole der vorstehenden Formeln weisen ihre Bedeutungen jeweils unabhängig voneinander auf. In allen Formeln ist das Siliciumatom vierwertig.

In den nachfolgenden Beispielen sind, falls jeweils nicht anders angegeben,
a) alle Drücke bei 0,10 MPa (abs.),
b) alle Temperaturen 23°C,
c) alle Mengen-, und Prozentangaben und Teile als Gewichtsteile, angegeben.

### Beispiele:

### Substratmaterialien

Die Haftung der Siliconzusammensetzungen (S) sowie der nicht erfindungsgemäßen additionsvernetzten Siliconelastomere wurde auf folgenden Substraten getestet:
a) Polybutylenterephthalat (PBT): Pocan^{®} B 3235 (Lanxess); 30% Glasfasern enthaltend
b) Polycarbonat (PC-1) : Makrolon^{®} 2405 (Bayer MaterialScience AG)
c) Polycarbonat (PC-2): Lexan^{®} 141R (GE Plastics)
d) Polycarbonat-Polyester-Blend (PC-3): Xylex^{®} X8303CL (SABIC Innovative Plastics)
e) VA-Stahl (VA) (Industriequalität)

Vor der Herstellung der Schälprüfkörper wurden die Substratmaterialien für das Pressvulkanisationsverfahren respektive die Thermoplastgranulate für das Spritzgießverfahren entsprechend den Herstellerangaben in geeigneter Weise getrocknet.

### Charakterisierung der Haftung

Die Herstellung der Schälprüfkörper aus den Siliconzusammensetzungen (S) sowie den nicht erfindungsgemäßen additionsvernetzenden Siliconzusammensetzungen erfolgte einerseits unter Laborbedingungen im Pressvulkanisations-verfahren. Zusätzlich wurden weitere Schälprüfkörper im 2-Komponentenspritzgießverfahren unter realen Fertigungsbedingungen hergestellt, um die Haftung der Siliconzusammensetzungen (S) auf einer breiten Palette unterschiedlicher thermoplastischer Substratmaterialien zu testen.

Für die Herstellung über Pressvulkanisation wurde auf eine entsprechende Edelstahl- oder Aluminiumform zurückgegriffen, in die ein vorzugsweise mittels Spritzgießen hergestelltes Substrat mit den Abmessungen 60x25x2mm eingelegt und anschließend jene Form mit der zu testenden additionsvernetzenden Siliconzusammensetzung gefüllt wurde. Damit bei den Zugversuchen eine zu starke Dehnung der Siliconelastomere die Ergebnisse nicht verfälscht, wurde dabei ein Textilband in die Siliconzusammensetzung eingelegt. Die Vulkanisation erfolgte dabei über einen Zeitraum von 3 Minuten bei einer Temperatur von 120°C und einer Druckkraft von 30 to für die Substratmaterialien PC-1, PC-2 und PC-3, bei dem eine vollständige Vernetzung der Flüssigsiliconzusammensetzung erfolgte. Für das Substratmaterial VA erfolgte die Vulkanisation bei 180°C über einen Zeitraum von 10 Minuten. Anschließend wurden alle Schälprüfkörper auf Raumtemperatur abgekühlt. Der auf diese Weise hergestellte Schälprüfkörper, bestehend aus Substrat und 2,5 mm dicker Flüssigsiliconelastomerschicht mit eingelegtem Textilband, wurde nach Entnahme aus der Form zunächst mindestens 16 Stunden bei Raumtemperatur gelagert. Daraufhin wurde der Schälprüfkörper in eine Zugprüfvorrichtung eingespannt und die maximale Trennkraft bestimmt, die notwendig ist, um den anhaftenden Siliconelastomerstreifen zu entfernen.

Die Herstellung eines Schälprüfkörpers über das 2-Komponentenspritzgießverfahren erfolgte unter Verwendung einer Spritzgießmaschine mit rotierendem Plattenwerkzeug nach dem Stand der Technik. Dabei wurde zunächst ein Thermoplastgrundkörper hergestellt, der über einen rotierenden Drehteller zum zweiten Spritzgießaggregat befördert wurde. Im nächsten Prozessschritt wurde auf den fertigen Thermoplastgrundkörper die Siliconzusammensetzung (S) gespritzt und auf das Substrat aufvulkanisiert. Der Einspritzdruck für selbsthaftende additionsvernetzende Siliconzusammensetzungen liegt üblicherweise im Bereich zwischen 200 bis 2000 bar, kann aber in Sonderfällen diese Werte unter- oder überschreiten. Die Einspritztemperatur für selbsthaftende additionsvernetzende Siliconzusammensetzungen liegt üblicherweise im Bereich 15 bis 50°C, wobei diese Temperaturen in Einzelfällen ebenfalls unter- oder überschritten werden können.

Die im 2-Komponentenspritzgießverfahren hergestellten und zur Beurteilung der Haftfestigkeit der erfindungsgemäßen Siliconelastomere auf den Substraten herangezogenen Schälprüfkörper sind in DIN ISO 813 angegeben.

Vor der Haftungsprüfung wurden die über das 2-Komponentenspritzgießverfahren hergestellten Schälprüfkörper ebenfalls mindestens 16 Stunden bei Raumtemperatur gelagert. Die Haftungsprüfung sowie die Rissbildbeurteilung erfolgte auf die gleiche Weise wie mit den Schälprüfkörpern aus der Pressvulkanisation.

Die Quantifizierung der Haftung der Verbunde bestehend aus Siliconelastomer und Thermoplastgrundkörper erfolgte in Anlehnung an die Haftungsprüfung gemäß DIN ISO 813. Dabei wurde das sog. 90°-Schälverfahren so durchgeführt, dass Substrat und Siliconelastomerstreifen einen Winkel von 90° zueinander aufweisen und die Abzugsgeschwindigkeit vorzugsweise 50 mm/min beträgt. Die ermittelte Trennkraft (TK) wurde aus dem Quotienten der maximalen Kraft N und der Breite des Probekörpers in N/mm angegeben.

Je Beispiel wurden 3-5 Laminate gemessen, die Trennkraft als Mittelwert bestimmt.

Für die Zusammensetzungen der Beispiele wurden die nachfolgende Grundmasse, die angegebenen cyclischen

Organohydrogenpolysiloxane sowie die Haftvermittler HV 1 bis HV 6 als Bestandteile verwendet.

### Grundmasse (GM):

In einem handelsüblichen Laborkneter wurden 232 g eines vinyldimethylsiloxy-terminierten Polydimethylsiloxans mit einer Viskosität von 20 000 mPa*s (25°C) vorgelegt, auf 150°C aufgeheizt und mit 159 g einer hydrophoben pyrogenen Kieselsäure mit einer spezifischen Oberfläche von 300 m²/g (gemessen nach BET) und einem Kohlenstoffgehalt von 3,9-4,2 Gew.-% versetzt. Es entstand eine hochviskose Masse, die anschließend mit 130 g des oben genannten Polydimethylsiloxans verdünnt wurde. Durch Kneten unter Vakuum (10 mbar) bei 150°C wurde die erhaltene Masse innerhalb einer Stunde von Wasser und überschüssigen Beladungsmittelresten, insbesondere flüchtigen Bestandteilen, befreit.

### Cyclische Organohydrogenpolysiloxane

2,4,6,8,10-Pentamethylcyclopentasiloxan (CAS 6166-86-5) wurde von Sigma-Aldrich Corp. bezogen.

Die Herstellung von 2,4,6,8,10,12-Hexamethylcyclohexasiloxan (CAS 6166-87-6) erfolgte gemäß N. Omura and J. P. Kennedy, Macromolecules, 30, 3204 (1997*)*. Die Verbindung wurde über fraktionierende Destillation erhalten und die Reinheit mittels Gaschromatographie (GC) geprüft.

### Haftvermittler:

Die folgenden Haftvermittler wurden nach dem Fachmann bekannten Methoden (z. B. Organikum, 20. Auflage, Wiley-VCH GmbH) nach Standardvorschriften synthetisiert.

### Haftvermittler 1 (HV1) (erfindungsgemäß) :

Ethylenglykol-bis(undecylenat) (synthetisiert aus Ethylenglykol und Undecylensäure).

### Haftvermittler 2 (HV2) (erfindungsgemäß) :

Glycerin-tris(undecylenat) (synthetisiert aus Glycerin und Undecylensäure).

### Haftvermittler 3 (HV3) (erfindungsgemäß) :

Leinöl wurde naturbelassen aus einem konventionellen Lebensmittelmarkt bezogen.

### Haftvermittler 4 (HV4) (erfindungsgemäß) :

Glycerin-triundecenylether (synthetisiert aus Glycerin und 1-Brom-10-undecen).

### Haftvermittler 5 (HV5) (nicht erfindungsgemäß) :

Glycerin-tris(stearat) (synthetisiert aus Glycerin und Stearinsäure).

### Haftvermittler 6 (HV6) (nicht erfindungsgemäß):

Linolensäureethylester (synthetisiert aus Ethanol und Linolensäure).

### Beispiel 1 (erfindungsgemäß)

### Herstellung der A-Komponente:

345,8 g Grundmasse wurden mit 3,5 g eines dimethylvinylsiloxyendgestopperten Polydimethylsiloxans mit Methylvinylsiloxygruppen mit einem Vinylgehalt von 2,5 mmol/g und einer Viskosität von 350 mm²/s und 0,7 g einer Katalysatorlösung mit einem Pt-Gehalt von 1 Gew.-%, welche einen Platin-Divinyltetramethyldisiloxan-Komplex in Siliconpolymer enthält, vermischt.

### Herstellung der B-Komponente:

90 g Grundmasse wurden mit 0,1 g 1-Ethinyl-1-cyclohexanol, 5,5 g eines vinyldimethylsiloxy-terminierten Polydimethylsiloxans mit einer Viskosität von 20 000 mPa*s (25°C), 2,5 g eines Mischpolymerisats aus Dimethylsiloxy- und Methylhydrogensiloxy-Einheiten im Molverhältnis 2:1, das Trimethylsiloxyendgestoppert ist mit einer Viskosität von 100 mPa*s und einem Si-H-Gehalt von 0,5%, 1,5 g HV 1, und 0,8 g Pentamethylcyclopentasiloxan vermischt.

### Beispiel 2 (erfindungsgemäß)

Die Herstellung von Komponente A erfolgte analog zu Beispiel 1. Für die B-Komponente wurden 90 g Grundmasse mit 0,1 g 1-Ethinyl-1-cyclohexanol, 5,5 g eines vinyldimethylsiloxyterminierten Polydimethylsiloxans mit einer Viskosität von 20 000 mPa*s (25°C), 1,8 g eines Mischpolymerisats aus Dimethylsiloxy- und Methylhydrogensiloxy-Einheiten im Molverhältnis 1:1 mit Trimethylsiloxy-Endgruppen und einer Viskosität von 65 mPa*s und einen Si-H-Gehalt von 0,75%, 1 g eines Gemisches aus Pentamethylcyclopentasiloxan und Hexamethylcyclohexasiloxan im Verhältnis 3:2, und 1,8 g HV 2, vermischt.

### Beispiel 3 (erfindungsgemäß)

Die Herstellung von Komponente A erfolgte analog zu Beispiel 1. Für die B-Komponente wurden 90 g Grundmasse mit 0,1 g 1-Ethinyl-1-cyclohexanol, 2,5 g eines vinyldimethylsiloxyterminierten Polydimethylsiloxans mit einer Viskosität von 20 000 mPa*s (25°C), 5,3 g eines Mischpolymerisats aus Dimethylsiloxy-, Methylhydrogensiloxy- und Methylphenylsiloxy-Gruppen und Trimethylsiloxy-Endgruppen mit einer Viskosität von 35 mPa*s und einem Si-H-Gehalt von 0,8%, 0,8 g eines Gemisches aus Pentamethylcyclopentasiloxan und Hexamethylcyclohexasiloxan im Verhältnis 5:3, und 1,1 g HV 3 vermischt.

### Beispiel 4 (erfindungsgemäß)

Die Herstellung von Komponente A erfolgte analog zu Beispiel 1. Für die B-Komponente wurden 90 g Grundmasse mit 0,1 g 1-Ethinyl-1-cyclohexanol, 2,5 g eines vinyldimethylsiloxyterminierten Polydimethylsiloxans mit einer Viskosität von 20 000 mPa*s (25°C), 5,3 g eines Mischpolymerisats aus Dimethylsiloxy-, Methylhydrogensiloxy- und Methylphenylsiloxy-Gruppen und Trimethylsiloxy-Endgruppen mit einer Viskosität von 35 mPa*s und einem Si-H-Gehalt von 0,8%, 1,0 g eines Gemisches aus Pentamethylcyclopentasiloxan und Hexamethylcyclohexasiloxan im Verhältnis 1:1, und 1,8 g HV 4 vermischt.

### Beispiel 5 (nicht erfindungsgemäß)

Die Herstellung von Komponente A erfolgte analog zu Beispiel 1. Für die B-Komponente wurden 90 g Grundmasse mit 0,1 g 1-Ethinyl-1-cyclohexanol, 5,5 g eines vinyldimethylsiloxyterminierten Polydimethylsiloxans mit einer Viskosität von 20 000 mPa*s (25°C), 1,8 g eines Mischpolymerisats aus Dimethylsiloxy- und Methylhydrogensiloxy-Einheiten im Molverhältnis 1:1 mit Trimethylsiloxy-Endgruppen und einer Viskosität von 65 mPa*s und einen Si-H-Gehalt von 0,75%, 1 g eines Gemisches aus Pentamethylcyclopentasiloxan und Hexamethylcyclohexasiloxan im Verhältnis 3:2, und 1,8 g HV 5, vermischt.

### Beispiel 6 (nicht erfindungsgemäß)

Die Herstellung von Komponente A erfolgte analog zu Beispiel 1. Für die B-Komponente wurden 90 g Grundmasse mit 0,1 g 1-Ethinyl-1-cyclohexanol, 2,5 g eines vinyldimethylsiloxyterminierten Polydimethylsiloxans mit einer Viskosität von 20 000 mPa*s (25°C), 5,3 g eines Mischpolymerisats aus Dimethylsiloxy-, Methylhydrogensiloxy- und Methylphenylsiloxy-Gruppen und Trimethylsiloxy-Endgruppen mit einer Viskosität von 35 mPa*s und einem Si-H-Gehalt von 0,8%, 1,0 g eines Gemisches aus Pentamethylcyclopentasiloxan und Hexamethylcyclohexasiloxan im Verhältnis 1:1, und 1,8 g HV 6 vermischt.

### Beispiel 7 nicht erfindungsgemäßes Vergleichsbeispiel)

Die Herstellung von Komponente A erfolgte analog zu Beispiel 1. Für die B-Komponente wurden 90 g Grundmasse mit 0,1 g 1-Ethinyl-1-cyclohexanol, 6 g eines vinyldimethylsiloxyterminierten Polydimethylsiloxans mit einer Viskosität von 20 000 mPa*s (25°C), 2,7 g eines Mischpolymerisats aus Methylhydrogensiloxy- und Dimethylsiloxy-Einheiten im Molverhältnis 1:2 und Trimethylsiloxy-Endgruppen und einer Viskosität von 100 mPa*s sowie einem Si-H-Gehalt von 0,5%, und 1 g eines Gemisches aus Pentamethylcyclopentasiloxan und Hexamethylcyclohexasiloxan im Verhältnis 1:1 vermischt.

Für die durchgeführten Haftungsversuche mit den additionsvernetzenden Siliconzusammensetzungen gemäß den Beispielen 1 - 7 wurden jeweils Komponente A und B im Verhältnis 1 : 1 homogen vermischt und die erhaltene Siliconmasse in der oben beschriebenen Weise auf das jeweilige Substrat über Pressvulkanisation aufvulkanisiert.

Für die Herstellung der Schälprüfkörper im Spritzgießverfahren wurden entsprechend größere Mengen der erfindungsgemäßen additionsvernetzenden Siliconzusammensetzung gemäß Beispiel 2 hergestellt und die Komponenten A und B in geeignete Behältnisse überführt. Diese Behältnisse wurden gemäß dem Stand der Technik in eine geeignete Dosiereinrichtung einer Spritzgießmaschine eingespannt und im 2-Komponentenspritzgießverfahren Schälprüfkörper nach DIN ISO 813, bestehend aus dem erfindungsgemäßem Siliconelastomer und dem entsprechenden Thermoplastgrundkörper, hergestellt.

Die Ergebnisse der Trennkraftmessungen unter Verwendung der erfindungsgemäßen additionsvernetzenden

Siliconzusammensetzungen aus den Beispielen 1 - 7 sind in Tabelle 1 angegeben:

**Tabelle 1:**

| | **Trennkräfte in N/mm auf angegebenem Substrat** | | | | |
|---|---|---|---|---|---|
| **Beispiel** | **PC1** | **PC2** | **PC3** | **PBT** | **VA** |
| **1** | 10,8 | 12,2 | 9,6 | 10,9 | 0,4 |
| **2** | 16,4 | 15,4 | 14,8 | 16,1 | 0,9 |
| **3** | 8,2 | 7,9 | 6,1 | 7,9 | 0,5 |
| **4** | 12,6 | 12,3 | 10,8 | 12,9 | 0,6 |
| **5*** | 0,4 | 0,8 | 0,2 | 1,1 | 0,3 |
| **6*** | 0,3 | 0,3 | 0,2 | 0,8 | 0,7 |
| **7*** | 0,4 | 0,5 | 0,3 | 1,2 | 0,5 |

| | | | | | |
|---|---|---|---|---|---|
| *nicht erfindungsgemäss | | | | | |

## Patentansprüche

1. Additionsvernetzende Siliconzusammensetzungen (S), enthaltend
(A) mindestens ein Diorganopolysiloxan der allgemeinen Formel (I)
R¹ₐR²_{b}SiO_{(4-a-b)/2} (I),
in der
**R¹** Hydroxylrest oder einen monovalenten, unsubstituierten oder halogensubstituierten Kohlenwasserstoffrest mit 1 bis 20 Kohlenstoffatomen, der frei von aliphatisch ungesättigten Gruppen ist und O-, N-, S-, oder P-Atome enthalten kann,
**R²** einen monovalenten, aliphatisch ungesättigten, unsubstituierten oder halogensubstituierten Kohlenwasserstoffrest mit 2 bis 10 Kohlenstoffatomen, der O-, N-, S-, oder P-Atome enthalten kann und
**b** Werte von 0,0001 bis 2 bedeuten, mit der Maßgabe, dass 1,5<(**a**+**b**)≤3,0, und dass pro Molekül durchschnittlich mindestens zwei aliphatisch ungesättigte Reste **R²** enthalten sind und dass die bei 25°C bestimmte Viskosität der Diorganopolysiloxane (A) 1 bis 40 000 000 mPa*s beträgt,
(B) mindestens ein cyclisches Organohydrogenpolysiloxan der allgemeinen Formel (II),
(SiHR⁷O)g (SiR⁸R⁹O)ₕ (II),
wobei
**R⁷** Wasserstoff oder die Bedeutungen von **R⁸**, und
**R⁸ und R⁹** (a) einen monovalenten aliphatisch gesättigten Kohlenwasserstoffrest mit 1 bis 20 Kohlenstoffatomen, oder
(b) einen unsubstituierten oder halogensubstituierten monovalenten Kohlenwasserstoffrest mit 6 bis 20 Kohlenstoffatomen, welcher mindestens einen aromatischen C₆-Ring enthält, oder
(c) einen monovalenten cycloaliphatischen unsubstituierten oder halogensubstituierten Kohlenwasserstoffrest mit 3 bis 20 Kohlenstoffatomen, oder
(d) einen halogensubstituierten, gesättigten, monovalenten Kohlenwasserstoffrest mit 2 bis 20 Kohlenstoffatomen, der O-, N-, S-, oder P-Atome enthalten kann, oder
(e) einen Si-Atome enthaltenden linearen, cyclischen oder verzweigten Rest der ein oder mehrere Si-gebundene Wasserstoffatome enthalten kann, bedeuten,
**g** ine Zahl größer oder gleich 1, und
**h** 0 oder eine positive Zahl bedeuten, mit der Maßgabe, dass die Summe aus **g** und **h** eine Zahl größer oder gleich 4 ist,
(C) mindestens einen Haftvermittler der allgemeinen Formel (III) 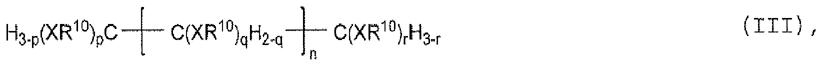 wobei
**R¹⁰** Wasserstoffatom oder einen linearen, verzweigten oder zyklischen aliphatischen Kohlenwasserstoffrest mit 1 - 30 Kohlenstoffatomen, der eine oder mehrere C=C-Doppelbindungen und funktionelle Gruppen **Y** enthalten kann,
**X** ausgewählt wird aus -CH₂-, -C(=O)-, -O-C(=O)-, -O-, -NH-C(=O)- und -NH-C(=O)-O-,
**Y** ausgewählt wird aus Carbonyl, Ethern, Estern, Carbonsäuren, Amiden, Säureamiden, Carbamaten, Harnstoffen, Urethanen und Alkoholen,
**n** 0 oder eine positive Zahl,
**p** und **r** eine Zahl 0, 1, 2 oder 3 und
**q** eine Zahl 0,1 oder 2 bedeuten,
mit der Maßgabe, dass Der Haftvermittler (C) mindestens zwei C=C-Doppelbindungen enthält, und
(D) mindestens einen Hydrosilylierungskatalysator.

2. Additionsvernetzende Siliconzusammensetzungen (S) nach Anspruch 1, bei denen die Summe aus **g** und **h** 5 bis 20 ist.

3. Additionsvernetzende Siliconzusammensetzungen (S) nach Anspruch 1 oder 2, bei denen das cyclische Organohydrogenpolysiloxan (B) der allgemeinen Formel (II) frei von aromatischen Gruppen ist.

4. Additionsvernetzende Siliconzusammensetzungen (S) nach Anspruch 1 bis 3, bei denen zusätzlich (E) mindestens ein Organohydrogenpolysiloxan der allgemeinen Formel 1 (IV)
R³_{c}R⁴_{d}R⁵ₑH_{f}SiO_{(4-c-d-2e-f)/2} (IV),
enthalten ist, wobei
**R³** einen monovalenten aliphatisch gesättigten Kohlenwasserstoffrest mit 1 bis 20 Kohlenstoffatomen,
**R⁴** (a) einen monovalenten, unsubstituierten oder halogensubstituierten Kohlenwasserstoffrest mit 6 bis 15 Kohlenstoffatomen, welcher mindestens einen aromatischen C₆-Ring enthält, oder
(b) einen monovalenten, unsubstituierten oder halogensubstituierten, gesättigten Kohlenwasserstoffrest mit 2 bis 20 Kohlenstoffatomen, in dem einzelne Kohlenstoffatome durch O-, N-, S- oder P-Atome ersetzt sein können,
**R⁵** einen beidseitig Si-gebundenen bivalenten, unsubstituierten oder halogensubstituierten Kohlenwasserstoffrest mit 6 bis 20 Kohlenstoffatomen, in dem einzelne Kohlenstoffatome durch O-, N-, S-, oder P-Atome ersetzt sein können,
**c** und **f** positive Zahlen bedeuten, und
**d** und **e** Null oder eine positive Zahl bedeuten,
mit der Maßgabe, dass die Summe (c+d+2e+f) ≤ 3 ist. das
Organohydrogenpolysiloxan (E) pro Molekül durchschnittlich mindestens 3 SiH-Gruppen enthält, und
dass die bei 25°C bestimmte Viskosität des Organohydrogenpolysiloxans (E) 5 mPa*s bis 5.000 mPa*s beträgt, und dass das Organohydrogenpolysiloxan (E) nicht ein cyclisches Organohydrogenpolysiloxan der allgemeinen Formel (SiHR⁷O)_{g} (SiR⁸R⁹O)ₕ ist.

5. Additionsvernetzende Siliconzusammensetzungen (S) nach Anspruch 1 bis 4, bei denen in der allgemeinen Formel (III) die Indizes **p**, **q** und **r** die Werte Null oder 1 bedeuten.

6. Additionsvernetzende Siliconzusammensetzungen (S) nach Anspruch 1 bis 5, bei denen in der allgemeinen Formel (III) der Index **n** die Werte Null oder 1 bedeutet.

7. Additionsvernetzte Siliconelastomere, die aus den Siliconsusammensetzungen (S) gemäss Anspruch 1 bis 6 hergestellt sind.

8. Verfahren zur Herstellung der additionsvernetzenden Siliconzusammensetzungen (S) gemäss Anspruch 1 bis 6, bei dem mindestens die Komponenten (A), (B), (C) und (D) miteinander vermischt werden.

9. Verbundmaterial, bei dem wenigstens ein Teil des Verbundmaterials aus dem additionsvernetzenden Siliconelastomer gemäss Anspruch 7 besteht, das mit wenigstens einem Substratmaterial fest verbunden ist.

10. Verfahren zur Herstellung von Verbundmaterialien, bei dem die Siliconzusammensetzungen (S) nach Anspruch 1 bis 6 auf das Substrat aufgebracht und anschließend durch Erwärmen auf 40 bis 250°C zu einem Verbundmaterial vernetzt wird.

## Claims

1. Addition-crosslinking silicone compositions (S) comprising
(A) at least one diorganopolysiloxane of the general formula (I)
R¹ₐR²_{b}SiO_{(4-a-b)/2} (I)
in which
**R¹** is hydroxyl radical or a monovalent, unsubstituted or halogen-substituted hydrocarbon radical having 1 to 20 carbon atoms, which is free of aliphatically unsaturated groups and may contain O, N, S, or P atoms,
**R²** is a monovalent, aliphatically unsaturated, unsubstituted or halogen-substituted hydrocarbon radical having 2 to 10 carbon atoms, which may contain O, N, S, or P atoms, and
**b** denotes values from 0.0001 to 2,
with the proviso that 1.5<(**a+b**)≤3.0, and that per molecule there are on average at least two aliphatically unsaturated radicals **R²**, and that the viscosity of the diorganopolysiloxanes (A) as determined at 25°C is 1 to 40 000 000 mPa*s,
(B) at least one cyclic organohydrogenpolysiloxane of the general formula (II),
(SiHR⁷O)_{g} (SiR⁸R⁹O)ₕ (II)
where
**R⁷** is hydrogen or denotes the definitions of **R⁸**, and
**R⁸ and R⁹** are
(a) a monovalent aliphatically saturated hydrocarbon radical having 1 to 20 carbon atoms, or
(b) an unsubstituted or halogen-substituted monovalent hydrocarbon radical having 6 to 20 carbon atoms, which contains at least one aromatic C₆ ring, or
(c) a monovalent cycloaliphatic unsubstituted or halogen-substituted hydrocarbon radical having 3 to 20 carbon atoms, or
(d) a halogen-substituted, saturated, monovalent hydrocarbon radical having 2 to 20 carbon atoms, which may contain O, N, S, or P atoms, or
(e) a linear, cyclic, or branched radical containing Si atoms, which may contain one or more Si-bonded hydrogen atoms,
**g** is a number greater than or equal to 1, and
**h** is 0 or a positive number, with the proviso that the sum of **g** and **h** is a number greater than or equal to 4,
(C) at least one adhesion promoter of the general formula (III) 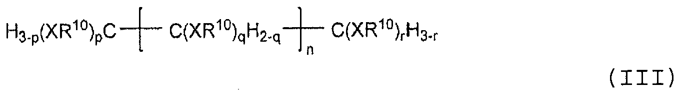 where
**R¹⁰** is hydrogen atom or a linear, branched, or cyclic aliphatic hydrocarbon radical having 1 - 30 carbon atoms, which may contain one or more C=C double bonds and functional groups **Y**,
**X** is selected from -CH₂-, -C(=O)-, -O-C(=O)-, -O-, -NH- C(=O)-, and -NH-C(=O)-O-,
**Y** is selected from carbonyl, ethers, esters, carboxylic acids, amides, acid amides, carbamates, ureas, urethanes, and alcohols,
**n** is 0 or a positive number,
**p** and **r** are a number 0, 1, 2, or 3, and
**q** is a number 0, 1, or 2, with the proviso that the adhesion promoter (C) comprises at least two C=C double bonds, and (D) at least one hydrosilylation catalyst.

2. Addition-crosslinking silicone compositions (S) according to Claim 1, wherein the sum of **g** and **h** is 5 to 20.

3. Addition-crosslinking silicone compositions (S) according to Claim 1 or 2, wherein the cyclic organohydrogenpolysiloxane (B) of the general formula (II) is free of aromatic groups.

4. Addition-crosslinking silicone compositions (S) according to Claims 1 to 3, further comprising (E) at least one organohydrogenpolysiloxane of the general formula (IV)
R³_{cR}⁴_{d}R⁵ₑH_{f}SiO_{(4-c-d-2e-f)/2} (IV)
where
**R³** is a monovalent aliphatically saturated hydrocarbon radical having 1 to 20 carbon atoms,
**R⁴** (a) is a monovalent, unsubstituted or halogen-substituted hydrocarbon radical having 6 to 15 carbon atoms, which contains at least one aromatic C₆ ring, or (b) is a monovalent, unsubstituted or halogen-substituted, saturated hydrocarbon radical having 2 to 20 carbon atoms, in which individual carbon atoms may have been replaced by O, N, S or P atoms,
**R⁵** is a divalent, unsubstituted or halogen-substituted hydrocarbon radical which is Si-bonded at both ends and has 6 to 20 carbon atoms, and in which individual carbon atoms may have been replaced by O, N, S, or P atoms,
**c** and **f** are positive numbers, and
**d** and **e** are zero or a positive number,
with the proviso that the sum (c+d+2e+f) is ≤ 3, the organohydrogenpolysiloxane (E) contains per molecule on average at least 3 SiH groups, and that the viscosity of the organohydrogenpolysiloxane (E) as determined at 25°C is 5 mPa*s to 5000 mPa*s, and that the organohydrogenpolysiloxane (E) is not a cyclic organohydrogenpolysiloxane of the general formula (SiHR⁷O) g (SiR⁸R⁹O)ₕ.

5. Addition-crosslinking silicone compositions (S) according to Claims 1 to 4, wherein the indices **p**, **q**, and **r** in the general formula (III) denote the values zero or 1.

6. Addition-crosslinking silicone compositions (S) according to Claims 1 to 5, wherein the index **n** in the general formula (III) denotes the values zero or 1.

7. Addition-crosslinked silicone elastomers prepared from the silicone compositions (S) according to Claims 1 to 6.

8. Process for preparing the addition-crosslinking silicone compositions (S) according to Claims 1 to 6, wherein at least the components (A), (B), (C), and (D) are mixed with one another.

9. Composite material wherein at least part of the composite material consists of the addition-crosslinking silicone elastomer according to Claim 7, joined firmly to at least one substrate material.

10. Process for producing composite materials, wherein the silicone compositions (S) according to Claims 1 to 6 are applied to the substrate and subsequently, by heating at 40 to 250°C, crosslinking is carried out to give a composite material.

## Revendications

1. Compositions de silicone (S) réticulables par addition, contenant
(A) au moins un diorganopolysiloxane de formule générale (I)
R¹ₐR²_{b}SiO_{(4-a-b)/2} (I)
dans laquelle
R¹ est un radical hydroxy ou un radical hydrocarboné monovalent ayant de 1 à 20 atomes de carbone, non substitué ou substitué par halogène, qui est exempt de groupes à insaturation aliphatique et peut contenir des atomes d'oxygène, d'azote, de soufre ou de phosphore,
R² représente un radical hydrocarboné monovalent à insaturation aliphatique, ayant de 2 à 10 atomes de carbone, non substitué ou substitué par halogène, qui peut contenir des atomes d'oxygène, d'azote, de soufre ou de phosphore et
b représente des valeurs de 0,0001 à 2,
étant entendu que 1,5<(a+b)≤3,0 et qu'en moyenne au moins deux radicaux à insaturation aliphatique R² sont contenus par molécule et que la viscosité des diorganopolysiloxanes (A), déterminée à 25 °C, vaut de 1 à 40 000 000 mPa*s,
(B) au moins un organohydrogénopolysiloxane cyclique de formule générale (II),
(SiHR⁷O)_{g} (SiR⁸R⁹O)ₕ (II),
dans laquelle
R⁷ représente un atome d'hydrogène ou a les significations de R⁸, et
R⁸ et R⁹ représentent (a) un radical hydrocarboné monovalent à saturation aliphatique ayant de 1 à 20 atomes de carbone, ou (b) un radical hydrocarboné monovalent non substitué ou substitué par halogène, ayant de 6 à 20 atomes de carbone, qui contient au moins un cycle aromatique en C₆, ou (c) un radical hydrocarboné monovalent cycloaliphatique non substitué ou substitué par halogène, ayant de 3 à 20 atomes de carbone, ou (d) un radical hydrocarboné monovalent saturé substitué par halogène, ayant de 2 à 20 atomes de carbone, qui peut contenir des atomes d'oxygène, d'azote, de soufre ou de phosphore, ou (e) un radical linéaire, cyclique ou ramifié contenant des atomes de silicium, qui peut contenir un ou plusieurs atomes d'hydrogène liés au silicium, g représente un nombre supérieur ou égal à 1, et
h représente 0 ou un nombre positif, étant entendu que la somme de g et h est un nombre supérieur ou égal à 4,
(C) au moins un promoteur d'adhérence de formule générale (III) 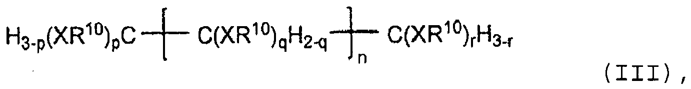 dans laquelle
R¹⁰ représente un atome d'hydrogène ou un radical hydrocarboné aliphatique linéaire, ramifié ou cyclique ayant de 1 à 30 atomes de carbone, qui peut contenir une ou plusieurs doubles liaisons C=C et des groupes fonctionnels Y,
X est choisi parmi -CH₂-, -C(=O)-, -O-C(=O)-, -O-, -NH-C(=O)- et -NH-C(=O)-O-,
Y est choisi parmi des composés carbonyle, des éthers, esters, acides carboxyliques, amides, amides d'acides, carbamates, urées, uréthanes et alcools,
n est 0 ou un nombre positif,
p et r représentent un nombre valant 0, 1, 2 ou 3 et
q représente un nombre valant 0, 1 ou 2,
étant entendu que le promoteur d'adhérence (C) contient au moins deux doubles liaisons C=C, et
(D) au moins un catalyseur d'hydrosilylation.

2. Compositions de silicone (S) réticulables par addition selon la revendication 1, dans lesquelles la somme de g et h vaut de 5 à 20.

3. Compositions de silicone (S) réticulables par addition selon la revendication 1 ou 2, dans lesquelles l'organohydrogénopolysiloxane cyclique (B) de formule générale (II) est exempt de groupes aromatiques.

4. Compositions de silicone (S) réticulables par addition selon l'une quelconque des revendications 1 à 3, dans lesquelles est en outre contenu
(E) au moins un organohydrogénopolysiloxane de formule générale (IV)
R³_{c}R⁴_{d}R⁵ₑH_{f}SiO_{(4-c-d-2e-f)/2} (IV),
dans laquelle
R³ représente un radical hydrocarboné monovalent à saturation aliphatique ayant de 1 à 20 atomes de carbone,
R⁴ représente (a) un radical hydrocarboné monovalent, non substitué ou substitué par halogène, ayant de 6 à 15 atomes de carbone, qui contient au moins un cycle aromatique en C₆, ou (b) un radical hydrocarboné monovalent saturé, non substitué ou substitué par halogène, ayant de 2 à 20 atomes de carbone, dans lequel des atomes de carbone individuels peuvent être remplacés par des atomes d'oxygène, d'azote, de soufre ou de phosphore,
R⁵ représente un radical hydrocarboné divalent, lié des deux côtés au silicium, non substitué ou substitué par halogène, ayant de 6 à 20 atomes de carbone, dans lequel des atomes de carbone individuels peuvent être remplacés par des atomes d'oxygène, d'azote, de soufre ou de phosphore,
c et f représentent des nombres positifs, et
d et e représentent 0 ou un nombre positif,
étant entendu que la somme (c+d+2e+f) est ≤ 3, l'organohydrogénopolysiloxane (E) contient par molécule en moyenne au moins 3 groupes SiH, et
que la viscosité déterminée à 25°C de l'organohydrogénopolysiloxane (E) vaut de 5 mPa*s à 5 000 mPa*s, et que l'organohydrogénopolysiloxane (E) n'est pas un organohydrogénopolysiloxane cyclique de formule générale (SiHR⁷O)_{g} (SiR⁸R⁹O)ₕ.

5. Compositions de silicone (S) réticulables par addition selon l'une quelconque des revendications 1 à 4, dans lesquelles dans la formule générale (III) les indices p, q et r représentent les valeurs zéro ou 1.

6. Compositions de silicone (S) réticulables par addition selon l'une quelconque des revendications 1 à 5, dans lesquelles dans la formule générale (III) l'indice n représente les valeurs zéro ou 1.

7. Élastomères silicone réticulés par addition, qui sont produits à partir des compositions de silicone (S) selon l'une quelconque des revendications 1 à 6.

8. Procédé pour la préparation des compositions de silicone (S) réticulables par addition, selon l'une quelconque des revendications 1 à 6, dans lequel on mélange entre eux au moins les composants (A), (B), (C) et (D).

9. Matériau composite, dans lequel au moins une partie du matériau composite consiste en l'élastomère silicone réticulable par addition selon la revendication 7, qui est solidement assemblé avec au moins un matériau de support.

10. Procédé pour la production de matériaux composites, dans lequel on applique sur le support les compositions de silicone (S) selon l'une quelconque des revendications 1 à 6 et ensuite on les fait réticuler en un matériau composite par chauffage à une température de 40 à 250 °C.
